# EUROPEAN PATENT APPLICATION

(11) **EP 4 848 866 A1**
(43) Date of publication of application: **02.12.2026**
(21) Application number: 25751368.9
(22) Date of filing: 24.01.2025
(51) Int. Cl.: H04W 72/232

(54) **COMMUNICATION METHOD AND COMMUNICATION APPARATUS**

(30) Priority: 08.02.2024 CN 202410178285
(71) Applicant: HUAWEI TECHNOLOGIES CO., LTD., Shenzhen, Guangdong 518129 (CN)
(72) Inventor: JIAO, Shurong, Shenzhen, Guangdong 518129 (CN); LI, Jun, Shenzhen, Guangdong 518129 (CN); GAO, Fei, Shenzhen, Guangdong 518129 (CN); HUA, Meng, Shenzhen, Guangdong 518129 (CN)
(74) Representative: Gill Jennings & Every LLP
(86) International application number: PCT/CN2025/074927
(87) International publication number: WO 2025/167766

(57) **Abstract**

This application provides a communication method. According to the method, when first uplink information needs to be sent in a first slot in which both an SBFD symbol and a non-SBFD symbol are present, a third resource used to transmit the first uplink information can be determined, based on a preset condition, from a first resource used for an SBFD slot and a second resource used for a non-SBFD slot, where the third resource is the first resource or the second resource, so that an uplink resource can be determined in a hybrid slot to transmit the uplink information. In addition, according to the method, a resource determining manner before multiplexing and a resource determining manner after multiplexing are designed, to improve a processing procedure of uplink multiplexing in a hybrid slot in which both an SBFD symbol and a non-SBFD symbol are present, thereby taking an existing communication system into account while further improving an SBFD system design.

## Description

This application claims priority to Chinese Patent Application No. 202410178285.1, filed with the China National Intellectual Property Administration on February 8, 2024 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Currently, when uplink information needs to be transmitted via an uplink resource within a slot, if the slot includes only subband full duplex (subband full duplex, SBFD) symbols, an uplink resource#1 used for an SBFD slot may be determined from resources configured for the SBFD slot; or if the slot includes only non-SBFD symbols, an uplink resource#2 used for a non-SBFD slot may be determined from resources configured for the non-SBFD slot. However, when both SBFD symbols and non-SBFD symbols are present in the slot, if uplink information is to be sent, only the uplink resource#1 used for the SBFD slot and the uplink resource#2 used for the non-SBFD slot can be determined in the slot, but to use the uplink resource#1 or the uplink resource#2 to transmit the uplink information cannot be determined.

In addition, in actual communication systems, in a hybrid slot in which both SBFD symbols and non-SBFD symbols are present, if a plurality of uplink resources are to be sent and the plurality of uplink resources overlap in time, a plurality of different pieces of information carried on the plurality of uplink resources that overlap in time need to be concatenated through encoding to obtain a total bit sequence, and the total bit sequence is carried on one uplink resource for transmission. Therefore, if a payload size of each of the plurality of uplink resources that overlap in time is smaller than a quantity of bits of the total bit sequence, an uplink resource needs to be re-determined in the hybrid slot to transmit the total bit sequence.

Therefore, in the hybrid slot in which both the SBFD symbols and the non-SBFD symbols are present, how to determine which resource to be used to ensure integrity of the communication system remains to be resolved.

### SUMMARY

This application provides a communication method and a communication apparatus, to determine, in a hybrid slot in which both an SBFD symbol and a non-SBFD symbol are present, an uplink resource used to transmit uplink information, thereby ensuring integrity of a communication system.

According to a first aspect, a communication method is provided. The method includes: receiving first indication information from a network device, where the first indication information is used to determine a first resource and a second resource in a first slot, where the first resource and the second resource correspond to first uplink information, the first slot includes a subband full duplex SBFD symbol and a non-SBFD symbol, the first resource is used for an SBFD slot, and the second resource is used for a non-SBFD slot; and sending the first uplink information on a third resource in the first slot, where the third resource is one of the first resource and the second resource.

According to the foregoing solution, when the first uplink information needs to be sent in the first slot in which both the SBFD symbol and the non-SBFD symbol are present, the third resource used to transmit the first uplink information can be determined from the first resource used for the SBFD slot and the second resource used for the non-SBFD slot, where the third resource is the first resource or the second resource, so that an uplink resource can be determined in a hybrid slot to transmit the uplink information, thereby taking an existing communication system into account while further improving an SBFD system design.

With reference to the first aspect, in some implementations of the first aspect, sending the first uplink information on the third resource in the first slot includes: when a time-domain symbol index of the first resource does not include an index of the non-SBFD symbol in the first slot and a time-domain symbol index of the second resource does not include an index of the SBFD symbol in the first slot, and/or when both the first resource and the second resource are available for uplink transmission, sending the first uplink information on the third resource in the first slot.

According to the foregoing solution, in the first slot, when all symbols of the first resource in the first slot are SBFD symbols and all symbols of the second resource in the first slot are non-SBFD symbols, and/or when both the first resource and the second resource are available for uplink transmission, that is, when all time-frequency-domain resources of the first resource and the second resource are valid uplink resources, one of the first resource and the second resource is determined as the third resource, and the uplink information is sent on the determined third resource. This can effectively guarantee operation of the system and further improve the SBFD system design.

With reference to the first aspect, in some implementations of the first aspect, the third resource being one of the first resource and the second resource includes: When a slot symbol index of the first resource includes an index of the non-SBFD symbol in the first slot and/or the first resource is unavailable for uplink transmission, the third resource is the second resource, where a time-domain symbol index of the second resource does not include an index of the SBFD symbol in the first slot and/or the second resource is available for uplink transmission; or when a slot symbol index of the second resource includes an index of the SBFD symbol in the first slot and/or the second resource is unavailable for uplink transmission, the third resource is the first resource, where a time-domain symbol index of the first resource does not include an index of the non-SBFD symbol in the first slot and/or the first resource is available for uplink transmission.

According to the foregoing solution, when the time-domain symbol index of the first resource includes the index of the non-SBFD symbol in the first slot and/or the first resource is unavailable for uplink transmission, that is, when the first resource is an invalid resource, the third resource is a valid second resource, and all symbols of the second resource in the first slot are non-SBFD symbols and/or the second resource is available for uplink transmission. In addition, when the time-domain symbol index of the second resource includes the index of the SBFD symbol in the first slot and/or the second resource is unavailable for uplink transmission, that is, when the second resource is an invalid resource, the third resource is a valid first resource, and all symbols of the first resource in the first slot are SBFD symbols and/or the first resource is available for uplink transmission. That is, when only one of the first resource and the second resource is valid, the third resource is the valid one of the first resource and the second resource. This can effectively guarantee operation of the system and further improve the SBFD system design.

With reference to the first aspect, in some implementations of the first aspect, the third resource being one of the first resource and the second resource includes: The third resource is one of the first resource and the second resource that has an earlier time-domain position; and/or the third resource is one of the first resource and the second resource that is indicated by the network device; and/or the third resource is one of the first resource and the second resource that is predefined in a protocol; and/or the third resource is one of the first resource and the second resource that does not have a frequency-domain offset; and/or the third resource is one of the first resource and the second resource that has a frequency-domain offset; and/or the third resource is one of the first resource and the second resource that has a same slot type as a fourth resource, where the fourth resource is used to carry first downlink information, and the first uplink information includes feedback information for the first downlink information.

When the first resource used for the SBFD slot is obtained by adding a frequency-domain offset to the second resource used for the non-SBFD slot, the first resource is a resource that has a frequency-domain offset, and the second resource is a resource that does not have a frequency-domain offset.

According to the foregoing solution, one of the first resource and the second resource that has the earlier time-domain position, and/or is indicated by the network device, and/or is predefined in the protocol, and/or does not have a frequency-domain offset, and/or has a frequency-domain offset, and/or has the same slot type as the fourth resource used to carry the first downlink information may be determined. That is, one of the first resource and the second resource may be determined based on the foregoing conditions to transmit the uplink information. This can effectively guarantee operation of the system and further improve the SBFD system design.

With reference to the first aspect, in some implementations of the first aspect, when the third resource is one of the first resource and the second resource that is indicated by the network device, the method further includes: receiving downlink control information DCI, where the DCI indicates one of the first resource and the second resource that the third resource is.

According to the foregoing solution, one of the first resource and the second resource may be determined, based on an indication of the DCI, to transmit the uplink information. This can effectively guarantee operation of the system and further improve the SBFD system design.

With reference to the first aspect, in some implementations of the first aspect, the method further includes: receiving second indication information from the network device, where the second indication information is used to determine a fifth resource and a sixth resource, in the first slot, that correspond to second uplink information, the first slot includes the subband full duplex SBFD symbol and the non-SBFD symbol, the fifth resource is used for the SBFD slot, and the sixth resource is used for the non-SBFD slot; and sending the second uplink information on a seventh resource in the first slot, where the seventh resource is one of the fifth resource and the sixth resource.

With reference to the first aspect, in some implementations of the first aspect, sending the second uplink information on the seventh resource in the first slot includes: when a time-domain symbol index of the fifth resource does not include the index of the non-SBFD symbol in the first slot and a time-domain symbol index of the sixth resource does not include the index of the SBFD symbol in the first slot, and/or when both the fifth resource and the sixth resource are available for uplink transmission, sending the second uplink information on the seventh resource in the first slot.

With reference to the first aspect, in some implementations of the first aspect, that the seventh resource is one of the fifth resource and the sixth resource includes: When a slot symbol index of the fifth resource includes the index of the non-SBFD symbol in the first slot and/or the fifth resource is unavailable for uplink transmission, the seventh resource is the sixth resource, and the time-domain symbol index of the sixth resource does not include the index of the SBFD symbol in the first slot and/or the sixth resource is available for uplink transmission; or when a slot symbol index of the sixth resource includes the index of the SBFD symbol in the first slot and/or the sixth resource is unavailable for uplink transmission, the seventh resource is the fifth resource, and the time-domain symbol index of the fifth resource does not include the index of the non-SBFD symbol in the first slot and/or the fifth resource is available for uplink transmission.

With reference to the first aspect, in some implementations of the first aspect, that the seventh resource is one of the fifth resource and the sixth resource includes: The seventh resource is one of the fifth resource and the sixth resource that has an earlier time-domain position; and/or the seventh resource is one of the fifth resource and the sixth resource that is indicated by the network device; and/or the seventh resource is one of the fifth resource and the sixth resource that is predefined in a protocol; and/or the seventh resource is one of the fifth resource and the sixth resource that does not have a frequency-domain offset; and/or the seventh resource is one of the fifth resource and the sixth resource that has a frequency-domain offset; and/or the seventh resource is one of the fifth resource and the sixth resource that has a same slot type as the fourth resource, where the fourth resource is used to carry the first downlink information, and the first uplink information includes the feedback information for the first downlink information.

With reference to the first aspect, in some implementations of the first aspect, when the seventh resource is one of the fifth resource and the sixth resource that is indicated by the network device, the method further includes: receiving downlink control information DCI, where the DCI indicates one of the fifth resource and the sixth resource that the seventh resource is.

According to the foregoing solution, in the first slot in which both the SBFD symbol and the non-SBFD symbol are present, one of the fifth resource and the sixth resource configured for the SBFD slot can be determined as the seventh resource according to a specific rule, for example, one of the fifth resource and the sixth resource that has an earlier time-domain position is determined as the seventh resource. The seventh resource is used to transmit the second uplink information. That is, one uplink resource is determined in the hybrid slot to transmit the second uplink information, thereby taking the existing communication system into account while further improving the SBFD system design.

With reference to the first aspect, in some implementations of the first aspect, when the third resource overlaps the seventh resource in time domain, the method further includes: receiving third indication information from the network device, where the third indication information is used to determine an eighth resource and a ninth resource, in the first slot, that correspond to the first uplink information and the second uplink information, the first slot includes the subband full duplex SBFD symbol and the non-SBFD symbol, the eighth resource is used for the SBFD slot, and the ninth resource is used for the non-SBFD slot; and sending the first uplink information and the second uplink information on a tenth resource in the first slot, where the tenth resource is one of the eighth resource and the ninth resource.

With reference to the first aspect, in some implementations of the first aspect, sending the first uplink information and the second uplink information on the tenth resource in the first slot includes: when a time-domain symbol index of the eighth resource does not include the index of the non-SBFD symbol in the first slot and a time-domain symbol index of the ninth resource does not include the index of the SBFD symbol in the first slot, and/or when both the eighth resource and the ninth resource are available for uplink transmission, sending the first uplink information and the second uplink information on the tenth resource in the first slot.

With reference to the first aspect, in some implementations of the first aspect, that the tenth resource is one of the eighth resource and the ninth resource includes: When a slot symbol index of the eighth resource includes the index of the non-SBFD symbol in the first slot and/or the eighth resource is unavailable for uplink transmission, the tenth resource is the ninth resource, and the time-domain symbol index of the ninth resource does not include the index of the SBFD symbol in the first slot and/or the ninth resource is available for uplink transmission; or when a slot symbol index of the ninth resource includes the index of the SBFD symbol in the first slot and/or the ninth resource is unavailable for uplink transmission, the tenth resource is the eighth resource, and the time-domain symbol index of the eighth resource does not include the index of the non-SBFD symbol in the first slot and/or the eighth resource is available for uplink transmission.

With reference to the first aspect, in some implementations of the first aspect, that the tenth resource is one of the eighth resource and the ninth resource includes: The tenth resource is one of the eighth resource and the ninth resource that has an earlier time-domain position; and/or the tenth resource is one of the eighth resource and the ninth resource that is indicated by the network device; and/or the tenth resource is one of the eighth resource and the ninth resource that is predefined in a protocol; and/or the tenth resource is one of the eighth resource and the ninth resource that does not have a frequency-domain offset; and/or the tenth resource is one of the eighth resource and the ninth resource that has a frequency-domain offset; and/or the tenth resource is one of the eighth resource and the ninth resource that has a same slot type as the fourth resource, where the fourth resource is used to carry the first downlink information, and the first uplink information includes the feedback information for the first downlink information.

With reference to the first aspect, in some implementations of the first aspect, when the tenth resource is one of the eighth resource and the ninth resource that is indicated by the network device, the method further includes: receiving downlink control information DCI, where the DCI indicates one of the eighth resource and the ninth resource that the tenth resource is.

According to the foregoing solution, in the first slot in which both the SBFD symbol and the non-SBFD symbol are present, if the third resource used to transmit the first uplink information and the seventh resource used to transmit the second uplink information overlap in time-domain, the first uplink information and the second uplink information need to be placed together in a new resource that can carry the first uplink information and the second uplink information for transmission. Therefore, in the first slot, one of the eighth resource and the ninth resource that correspond to the first uplink information and the second uplink information needs to be determined according to a specific rule, to transmit the first uplink information and the second uplink information. This improves a processing procedure of uplink multiplexing in the hybrid slot in which both the SBFD symbol and the non-SBFD symbol are present, thereby taking the existing communication system into account while further improving the SBFD system design.

According to a second aspect, a communication method is provided. The method includes: sending first indication information to a terminal device, where the first indication information is used to determine a first resource and a second resource in a first slot, where the first resource and the second resource correspond to first uplink information, the first slot includes a subband full duplex SBFD symbol and a non-SBFD symbol, the first resource is used for an SBFD slot, and the second resource is used for a non-SBFD slot; and receiving the first uplink information on a third resource in the first slot, where the third resource is one of the first resource and the second resource.

With reference to the second aspect, in some implementations of the second aspect, receiving the first uplink information on the third resource in the first slot includes: when a time-domain symbol index of the first resource does not include an index of the non-SBFD symbol in the first slot and a time-domain symbol index of the second resource does not include an index of the SBFD symbol in the first slot, and/or when both the first resource and the second resource are available for uplink transmission, receiving the first uplink information on the third resource in the first slot.

With reference to the second aspect, in some implementations of the second aspect, the third resource being one of the first resource and the second resource includes: When a slot symbol index of the first resource includes an index of the non-SBFD symbol in the first slot and/or the first resource is unavailable for uplink transmission, the third resource is the second resource, and a time-domain symbol index of the second resource does not include an index of the SBFD symbol in the first slot and/or the second resource is available for uplink transmission; or when a slot symbol index of the second resource includes an index of the SBFD symbol in the first slot and/or the second resource is unavailable for uplink transmission, the third resource is the first resource, and a time-domain symbol index of the first resource does not include an index of the non-SBFD symbol in the first slot and/or the first resource is available for uplink transmission.

With reference to the second aspect, in some implementations of the second aspect, the third resource being one of the first resource and the second resource includes: The third resource is one of the first resource and the second resource that has an earlier time-domain position; and/or the third resource is one of the first resource and the second resource that is indicated by a network device; and/or the third resource is one of the first resource and the second resource that is predefined in a protocol; and/or the third resource is one of the first resource and the second resource that does not have a frequency-domain offset; and/or the third resource is one of the first resource and the second resource that has a frequency-domain offset; and/or the third resource is one of the first resource and the second resource that has a same slot type as a fourth resource, where the fourth resource is used to carry first downlink information, and the first uplink information includes feedback information for the first downlink information.

With reference to the second aspect, in some implementations of the second aspect, when the third resource is one of the first resource and the second resource that is indicated by the network device, the method further includes: sending downlink control information DCI, where the DCI indicates one of the first resource and the second resource that the third resource is.

With reference to the second aspect, in some implementations of the second aspect, the method further includes: sending second indication information to the terminal device, where the second indication information is used to determine a fifth resource and a sixth resource, in the first slot, that correspond to second uplink information, the first slot includes the subband full duplex SBFD symbol and the non-SBFD symbol, the fifth resource is used for the SBFD slot, and the sixth resource is used for the non-SBFD slot; and receiving the second uplink information on a seventh resource in the first slot, where the seventh resource is one of the fifth resource and the sixth resource.

With reference to the second aspect, in some implementations of the second aspect, receiving the second uplink information on the seventh resource in the first slot includes: when a time-domain symbol index of the fifth resource does not include the index of the non-SBFD symbol in the first slot and a time-domain symbol index of the sixth resource does not include the index of the SBFD symbol in the first slot, and/or when both the fifth resource and the sixth resource are available for uplink transmission, receiving the second uplink information on the seventh resource in the first slot.

With reference to the second aspect, in some implementations of the second aspect, that the seventh resource is one of the fifth resource and the sixth resource includes: When a slot symbol index of the fifth resource includes the index of the non-SBFD symbol in the first slot and/or the fifth resource is unavailable for uplink transmission, the seventh resource is the sixth resource, and the time-domain symbol index of the sixth resource does not include the index of the SBFD symbol in the first slot and/or the sixth resource is available for uplink transmission; or when a slot symbol index of the sixth resource includes the index of the SBFD symbol in the first slot and/or the sixth resource is unavailable for uplink transmission, the seventh resource is the fifth resource, and the time-domain symbol index of the fifth resource does not include the index of the non-SBFD symbol in the first slot and/or the fifth resource is available for uplink transmission.

With reference to the second aspect, in some implementations of the second aspect, that the seventh resource is one of the fifth resource and the sixth resource includes: The seventh resource is one of the fifth resource and the sixth resource that has an earlier time-domain position; and/or the seventh resource is one of the fifth resource and the sixth resource that is indicated by the network device; and/or the seventh resource is one of the fifth resource and the sixth resource that is predefined in a protocol; and/or the seventh resource is one of the fifth resource and the sixth resource that does not have a frequency-domain offset; and/or the seventh resource is one of the fifth resource and the sixth resource that has a frequency-domain offset; and/or the seventh resource is one of the fifth resource and the sixth resource that has a same slot type as the fourth resource, where the fourth resource is used to carry the first downlink information, and the first uplink information includes the feedback information for the first downlink information.

With reference to the second aspect, in some implementations of the second aspect, when the seventh resource is one of the fifth resource and the sixth resource that is indicated by the network device, the method further includes: sending downlink control information DCI, where the DCI indicates one of the fifth resource and the sixth resource that the seventh resource is.

With reference to the second aspect, in some implementations of the second aspect, when the third resource overlaps the seventh resource in time domain, the method further includes: sending third indication information to the terminal device, where the third indication information is used to determine an eighth resource and a ninth resource, in the first slot, that correspond to the first uplink information and the second uplink information, the first slot includes the subband full duplex SBFD symbol and the non-SBFD symbol, the eighth resource is used for the SBFD slot, and the ninth resource is used for the non-SBFD slot; and receiving the first uplink information and the second uplink information on a tenth resource in the first slot, where the tenth resource is one of the eighth resource and the ninth resource.

With reference to the second aspect, in some implementations of the second aspect, receiving the first uplink information and the second uplink information on the tenth resource in the first slot includes: when a time-domain symbol index of the eighth resource does not include the index of the non-SBFD symbol in the first slot and a time-domain symbol index of the ninth resource does not include the index of the SBFD symbol in the first slot, and/or when both the eighth resource and the ninth resource are available for uplink transmission, receiving the first uplink information and the second uplink information on the tenth resource in the first slot.

With reference to the second aspect, in some implementations of the second aspect, that the tenth resource is one of the eighth resource and the ninth resource includes: When a slot symbol index of the eighth resource includes the index of the non-SBFD symbol in the first slot and/or the eighth resource is unavailable for uplink transmission, the tenth resource is the ninth resource, and the time-domain symbol index of the ninth resource does not include the index of the SBFD symbol in the first slot and/or the ninth resource is available for uplink transmission; or when a slot symbol index of the ninth resource includes the index of the SBFD symbol in the first slot and/or the ninth resource is unavailable for uplink transmission, the tenth resource is the eighth resource, and the time-domain symbol index of the eighth resource does not include the index of the non-SBFD symbol in the first slot and/or the eighth resource is available for uplink transmission.

With reference to the second aspect, in some implementations of the second aspect, that the tenth resource is one of the eighth resource and the ninth resource includes: The tenth resource is one of the eighth resource and the ninth resource that has an earlier time-domain position; and/or the tenth resource is one of the eighth resource and the ninth resource that is indicated by the network device; and/or the tenth resource is one of the eighth resource and the ninth resource that is predefined in a protocol; and/or the tenth resource is one of the eighth resource and the ninth resource that does not have a frequency-domain offset; and/or the tenth resource is one of the eighth resource and the ninth resource that has a frequency-domain offset; and/or the tenth resource is one of the eighth resource and the ninth resource that has a same slot type as the fourth resource, where the fourth resource is used to carry the first downlink information, and the first uplink information includes the feedback information for the first downlink information.

With reference to thesecond aspect, in some implementations of the second aspect, when the tenth resource is one of the eighth resource and the ninth resource that is indicated by the network device, the method further includes: sending downlink control information DCI, where the DCI indicates one of the eighth resource and the ninth resource that the tenth resource is.

According to a third aspect, a communication apparatus is provided. The apparatus includes: a transceiver unit, where the transceiver unit may perform receiving and sending processing in the first aspect; and a processing unit, where the processing unit of the communication apparatus may perform processing other than receiving and sending in the first aspect.

According to a fourth aspect, a communication apparatus is provided. The apparatus includes: a transceiver unit, where the transceiver unit may perform receiving and sending processing in the second aspect; and a processing unit, where the processing unit of the communication apparatus may perform processing other than receiving and sending in the second aspect.

According to a fifth aspect, a communication apparatus is provided, including a processor. The processor is configured to execute a computer program, to cause the communication apparatus to perform the method in any one of the first aspect and the second aspect and the possible implementations of the first aspect and the second aspect.

Optionally, there are one or more processors.

Optionally, the communication apparatus further includes a memory, the memory is configured to store the computer program, and there are one or more memories.

Optionally, the memory may be integrated with the processor, or the memory and the processor are separately disposed, or the memory is located in the processor.

Optionally, the communication apparatus further includes a transceiver circuit, for example, a transceiver or an input/output circuit.

According to a sixth aspect, a communication system is provided, including a terminal device and a network device. The terminal is configured to perform the method in the possible implementations of the first aspect, and the network device is configured to perform the method in the possible implementations of the second aspect.

According to a seventh aspect, a computer-readable storage medium is provided. The computer-readable storage medium stores a computer program or code. When the computer program or code is run on a computer, the computer is caused to perform the method in any one of the possible implementations of the first aspect and the second aspect.

According to an eighth aspect, a chip is provided, including at least one processor. The processor is configured to run a computer program, to cause an apparatus in which the chip is installed to perform the method in any one of the first aspect and the second aspect and the possible implementations of the first aspect and the second aspect.

The chip may include an output circuit or interface configured to send information or data and an input circuit or interface configured to receive information or data.

According to a ninth aspect, a computer program product is provided. The computer program product includes computer program code. When the computer program code is run on a communication apparatus, the apparatus is caused to perform the method in any one of the first aspect and the second aspect and the possible implementations of the first aspect and the second aspect.

The chip may include an input circuit or interface configured to send information or data and an output circuit or interface configured to receive information or data.

### BRIEF DESCRIPTION OF DRAWINGS

FIG. 1 is a diagram of an architecture of a mobile communication system 100 applicable to an embodiment of this application;
FIG. 2a to FIG. 2c show three duplex modes in NR;
FIG. 3 is a diagram of PUCCH resources carrying HARQ-ACKs;
FIG. 4 is a flowchart of uplink multiplexing;
FIG. 5 is a schematic flowchart of a communication method 200 according to an embodiment of this application;
FIG. 6 is a diagram of PUCCH resources in a hybrid slot;
FIG. 7 is a block diagram of a communication apparatus 1000 according to an embodiment of this application;
FIG. 8 is a block diagram of a communication apparatus 2000 according to an embodiment of this application; and
FIG. 9 is a block diagram of a chip system 3000 according to an embodiment of this application.

### DESCRIPTION OF EMBODIMENTS

The following describes technical solutions of this application with reference to accompanying drawings.

Various numbers such as first, second, #1, and #2 are merely used for differentiation for ease of description, are not used to limit the scope of embodiments of this application, and are not used to indicate a sequence or importance, for example, to distinguish between different messages and different information. "Predefinition" may be implemented by pre-storing corresponding code or a corresponding table in a device, or may be implemented in another manner that may indicate relevant information. A specific implementation of the predefinition is not limited in this application. A related "protocol" may be a standard protocol in the communication field, for example, may include a long term evolution (long term evolution, LTE) protocol, an NR protocol, and a related protocol applied to a future communication system. This is not limited in this application. The terms such as "exemplary", "for example", "example", and "in an (another) example" are used to represent giving an example, an illustration, or a description. Any embodiment or design scheme described as an "example" in this application should not be explained as being more preferred or having more advantages than another embodiment or design scheme. The terms "comprise", "include", "have", and variants thereof all mean "include but are not limited to", unless otherwise specifically emphasized in another manner. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. Related descriptions about sending a message, information, or data by a network element A to a network element B, and receiving a message, information, or data by the network element B from the network element A are intended to describe a network element to which the message, information, or data is to be sent. Whether the message, information, or data is directly sent or indirectly sent via another network element is not limited. "Indicating" may include direct indicating and indirect indicating. When a piece of indication information indicates A, the indication information may directly indicate A or indirectly indicate A, but it does not indicate that the indication information definitely carries A. Descriptions such as "when...", "in a case of...", "provided", and "if" all mean that a device performs corresponding processing in a specific objective situation, where time is not limited, the device is not necessarily required to perform a determining action during implementation, and this does not mean that there is another limitation.

The technical solutions in embodiments of this application may be applied to various communication systems, including but not limited to a 5th generation (5th generation, 5G) system or a new radio (new radio, NR) system, a long term evolution (long term evolution, LTE) system, a long term evolution-advanced technology (long term evolution-advanced, LTE-A) system, a wireless local area network (wireless local area network, WLAN) system, a satellite communication system, an optical communication system, a microwave communication system, and the like; and may be further applied to a future communication system, for example, a 6th generation mobile communication system, or a system integrating a plurality of systems. In addition, the technical solutions in embodiments of this application may be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system. In addition, the technical solutions in embodiments of this application may be further extended to similar wireless communication systems, for example, communication systems related to wireless fidelity (wireless fidelity, Wi-Fi), worldwide interoperability for microwave access (worldwide interoperability for microwave access, WiMAX), and a 3rd generation partnership project (3rd generation partnership project, 3GPP). This is not limited.

A device in the communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device.

The terminal device in embodiments of this application includes various devices having a wireless communication function, and the terminal device may be configured to be connected to a person, an object, a machine, or the like. The terminal device may be widely used in various scenarios, for example, cellular communication, D2D, V2X, peer to peer (peer to peer, P2P), M2M, MTC, IoT, virtual reality (virtual reality, VR), augmented reality (augmented reality, AR), industrial control, autonomous driving, telemedicine, smart grid, smart home, smart office, smart wearable, smart transportation, smart city, uncrewed aerial vehicle, robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, a multi-helicopter, a four-helicopter, or an airplane), a ship, a remote control device, a smart home device, or an industrial device; an apparatus built in the foregoing device (for example, a communication module, a modem, or a chip in the foregoing device); or another processing device connected to a wireless modem. For ease of description, an example in which the terminal device is a terminal or a UE is used for description below.

It should be understood that, in some scenarios, the UE may be further configured to serve as a base station. For example, the UE may serve as a scheduling entity that provides a sidelink signal between UEs in a scenario such as V2X, D2D, or P2P.

In embodiments of this application, an apparatus configured to implement a function of the terminal device may be the terminal device, or may be an apparatus that supports the terminal device in implementing the function, for example, a chip system or a chip. The apparatus may be installed in the terminal device. In embodiments of this application, the chip system may include a chip, or may include a chip and another discrete device.

The network device in embodiments of this application may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (MSR) node, a home base station, a network controller, an access node, a radio node, an access point (access point, AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a positioning node, and a RAN intelligent controller (RAN intelligent controller, RIC). The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station supports networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, the helicopter or the uncrewed aerial vehicle may be configured to serve as a device configured to communicate with another base station.

In some deployments, the network device mentioned in embodiments of this application may be a device including a CU or a DU, a device including a CU and a DU, or a device including a control plane CU node (central unit-control plane (central unit-control plane, CU-CP)), a user plane CU node (central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH. In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit. In different systems, the CU (or the CU-CP and the CU-UP), the DU, or the RU may also be referred to as different names, but a person skilled in the art may understand meanings thereof. For example, the radio access network may also be an open radio access network (open radio access network, O-RAN) architecture. In an ORAN system, the CU may also be referred to as an O-CU (an open CU), the DU may also be referred to as an O-DU, the CU-CP may also be referred to as an O-CU-CP, the CU-UP may also be referred to as an O-CU-UP, and the RU may also be referred to as an O-RU. Any unit among the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be the network device, or may be an apparatus that supports the network device in implementing the function, for example, a chip system or a chip. The apparatus may be installed in the network device. In embodiments of this application, the chip system may include a chip, or may include a chip and another discrete device.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

A scenario to which this application may be applied includes but is not limited to: an enhanced mobile broadband (enhanced mobile broadband, eMBB) scenario, an ultra-reliable low latency communication (ultra-reliable low latency communication, URLLC) scenario, an M2M scenario, a massive internet of things communication/massive machine type communication (massive machine type communication, mMTC) scenario, an uplink centric broadband communication (uplink centric broadband communication, UCBC) scenario, a real-time broadband communication (real-time broadband communication, RTBC) scenario, and the like. This is not limited.

For ease of understanding, a communication system to which embodiments of this application are applicable is described below. It should be understood that the following communication system is merely an example, and a communication system to which this application is applicable is not limited thereto.

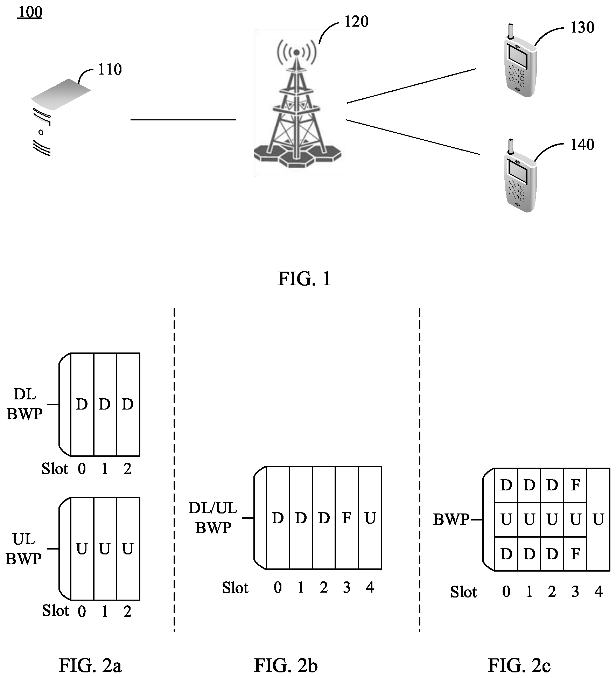

FIG. 1 is a diagram of an architecture of a mobile communication system 100 applicable to an embodiment of this application. As shown in FIG. 1, the mobile communication system includes a core network device 110, a radio access network device 120, and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be different independent physical devices, or functions of the core network device and logical functions of the radio access network device may be integrated into a same physical device, or some of functions of the core network device and some of functions of the radio access network device may be integrated into one physical device. The terminal device may be located at a fixed position, or may be mobile. FIG. 1 is merely an example diagram. The communication system may further include other network devices, for example, may further include a wireless relay device and a wireless backhaul device, which are not shown in FIG. 1. Quantities of core network devices, radio access network devices, and terminal devices that are included in the mobile communication system are not limited in embodiments of this application.

Embodiments of this application are applicable to downlink signal transmission, uplink signal transmission, and D2D signal transmission. For the downlink signal transmission, a sending device is a radio access network device, and a corresponding receiving device is a terminal device. For the uplink signal transmission, a sending device is a terminal device, and a corresponding receiving device is a radio access network device. For the D2D signal transmission, a sending device is a terminal device, and a corresponding receiving device is also a terminal device. A signal transmission direction is not limited in embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both of a licensed spectrum and an unlicensed spectrum. Communication between the radio access network device and the terminal device and between the terminal devices may be performed by using a spectrum below 6G, a spectrum above 6G, or both a spectrum below 6G and a spectrum above 6G. Spectrum resources used by the radio access network device and the terminal device are not limited in embodiments of this application.

FIG. 2a to FIG. 2c show three duplex modes in NR. Currently, frequency division duplex (frequency division duplex, FDD) and time division duplex (time division duplex, TDD) exist in NR.

FDD: As shown in FIG. 2a, the frequency division duplex has two types of bandwidth parts (bandwidth part, BWP). An upper part of FIG. 2a is a downlink (downlink, D) bandwidth part, and a lower part of FIG. 2a is an uplink (uplink, U) bandwidth part. As shown in FIG. 2a, a terminal device may perform downlink transmission on the downlink bandwidth part (DL BWP) in a slot (slot) 0, or the terminal device may perform uplink transmission on the uplink bandwidth part (UL BWP) in the slot 0. The DL BWP and the UL BWP are located on different carriers and are separated in frequency domain.

TDD: As shown in FIG. 2b, a center frequency of a DL BWP is the same as that of a UL BWP, and bandwidths of the DL BWP and the UL BWP may be the same or may be different. At a same moment, the terminal device can perform only uplink transmission or downlink transmission. For example, in a slot 0, only downlink transmission can be performed; in a slot 4, only uplink transmission can be performed; and a slot 3 is a flexible (flexible, F) slot, and may be used for both uplink transmission and downlink transmission, however, uplink transmission and downlink transmission cannot be performed on a same symbol in the slot 3 at the same time. A minimum granularity for switching between uplink transmission and downlink transmission is a symbol. For example, the slot 3 is a hybrid slot and includes 14 or 12 orthogonal frequency division multiplexing (orthogonal frequency division multiplexing, OFDM) symbols. In a possible case, when the slot 3 includes 14 symbols, first M symbols are downlink symbols, last N symbols are uplink symbols, and symbols other than the M symbols and the N symbols are flexible symbols, where 0≤M≤14, 0≤N≤14, and M+N≤14. A downlink symbol is used for downlink transmission, an uplink symbol is used for uplink transmission, a flexible symbol may be used for both uplink transmission and downlink transmission, and a specific transmission direction is notified by a network device to the terminal device through radio resource control (radio resource control, RRC) signaling or downlink control information (downlink control information, DCI) scheduling.

Compared with FDD, TDD occupies fewer frequency-domain resources. However, in TDD, uplink transmission and downlink transmission cannot be performed in one slot at the same time. For example, in the slot 0, only downlink transmission can be performed, and uplink transmission cannot be performed. Consequently, an uplink transmission delay is increased.

To resolve a delay problem in TDD, a standard proposes flexible duplex, which may be understood as complementary TDD (complementary TDD, C-TDD), or may also be referred to as full duplex (full duplex), subband full duplex (subband full duplex, SBFD), or another name. A core idea of SBFD is that both uplink and downlink transmission resources can be configured on a symbol or a slot in a TDD system. For example, as shown in FIG. 2c, in a slot 0, there is a segment of frequency-domain resources in a downlink BWP, and uplink transmission may be performed on the frequency-domain resources. Therefore, uplink transmission may be performed in the slot 0, thereby reducing an uplink transmission delay. This segment of uplink frequency-domain resources is typically referred to as an uplink subband. In addition, downlink transmission may also be performed in the slot 0. The network device can perform uplink transmission and downlink transmission in the slot 0 at the same time. The terminal device can also perform uplink transmission and downlink transmission in the slot 0 at the same time. For example, a full duplex terminal device can perform uplink transmission and downlink transmission in the slot 0 at the same time. Alternatively, the terminal device, for example, a half duplex terminal device, may perform only uplink transmission or downlink transmission. Compared with TDD, SBFD provides more uplink resources and therefore can increase uplink coverage.

Currently, the standard proposes that a slot may include an SBFD symbol and a non-SBFD (non-SBFD) symbol. However, it is unknown whether a channel/signal transmission is allowed to be mapped to the two types of symbols: SBFD symbols and non-SBFD symbols. In addition, the standard further proposes that different resources and parameters may be configured for a channel sounding reference signal (sounding reference signal, SRS), a physical uplink control channel (physical uplink control channel, PUCCH), and a physical uplink shared channel (physical uplink shared channel, PUSCH) with respect to SBFD symbols and non-SBFD symbols in different slots. Currently, when information needs to be transmitted on one uplink resource in one slot, if there is only an SBFD symbol in the slot, the to-be-used resource may be determined from resources configured for the SBFD symbol in the slot; or if there is only a non-SBFD symbol in the slot, the to-be-used resource may be determined from resources configured for the non-SBFD symbol in the slot.

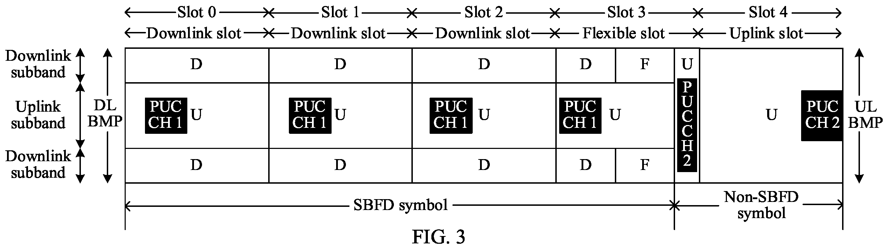

FIG. 3 is a diagram of PUCCH resources carrying hybrid automatic repeat request-acknowledgements (hybrid automatic repeat request-acknowledgement, HARQ-ACK). As shown in FIG. 3, a slot 0 to a slot 3 are slots in which an SBFD symbol (symbol) is located, and the slot 3 and a slot 4 are slots in which a non-SBFD symbol is located. It can be learned that both the SBFD symbol and the non-SBFD symbol are present in the slot 3. It should be understood that FIG. 3 is merely an example diagram, and time-domain positions and frequency-domain positions of the SBFD symbol and the non-SBFD symbol in the slot 3 are examples. For ease of description, a PUCCH resource used to transmit a HARQ-ACK message is referred to as a HARQ-ACK PUCCH resource in the following. A PUCCH#1 is a HARQ-ACK PUCCH resource used for the SBFD symbol, and a PUCCH#2 is a HARQ-ACK PUCCH resource used for the non-SBFD symbol. It can be learned from FIG. 3 that, because only the SBFD symbol is present in the slot 0, if a HARQ-ACK message needs to be sent, a current terminal device can determine, from a plurality of PUCCHs configured for the SBFD symbol in the slot 0, that the PUCCH#1 is to be used to transmit the HARQ-ACK. Similarly, because only the SBFD symbol is present in both the slot 1 and the slot 2, when a HARQ-ACK message needs to be transmitted in the slot 1 or the slot 2, the terminal device can determine to use the PUCCH#1. In addition, only the non-SBFD symbol is present in the slot 4. According to a current protocol, if a HARQ-ACK message needs to be sent, the terminal device can also determine to use the PUCCH#2 to transmit the HARQ-ACK.

However, when both an SBFD symbol and a non-SBFD symbol are present in a slot, as shown in FIG. 3, both the SBFD symbol and the non-SBFD symbol are present in the slot 3, according to the current protocol, if HARQ-ACK information needs to be sent in this case, only the PUCCH#1 and the PUCCH#2 can be determined from a plurality of PUCCHs configured for the SBFD symbol and the non-SBFD symbol respectively, but to use the PUCCH#1 or the PUCCH#2 cannot be determined. Therefore, in a hybrid (flexible ) slot in which both an SBFD symbol and a non-SBFD symbol are present, when there are different resources configured for the SBFD symbol and the non-SBFD symbol, how to determine which symbol's resource is to be used remains an urgent problem to be resolved.

In an actual communication system, when a plurality of different pieces of information need to be transmitted, the plurality of different pieces of information may be transmitted on different uplink resources in one slot, and the uplink resources corresponding to the different information overlap in time. In this case, the different information needs to be multiplexed, and one uplink resource needs to be determined for transmission within the time.

Uplink multiplexing in NR is described below by using uplink resources carrying different uplink control information (uplink control information, UCI). In an NR standard, uplink channels include but are not limited to a PUCCH and a PUSCH.

The PUCCH may carry UCI, including a scheduling request SR, a hybrid automatic repeat request acknowledgement HARQ-ACK, channel state information CSI, and the like. For a plurality of uplink carriers in a same PUCCH group (group), the PUCCH is sent on a maximum of one uplink carrier at a same moment. If two or more PUCCHs carrying different UCI overlap in time, the UCI needs to be carried on a same PUCCH for sending. The PUCCH used for sending may be one of the original two or more PUCCHs, or may be a new PUCCH. This process is referred to as multiplexing (multiplexing) the UCI to the PUCCH. Because each piece of UCI is a bit sequence, different bit sequences may be concatenated and then jointly encoded or independently encoded and then concatenated. Finally, a total bit sequence is output and mapped to the PUCCH. An objective of determining a new PUCCH is that, when a payload size of each of the two or more PUCCHs that overlap in time domain and carry the different UCI is smaller than a quantity of bits of the finally output total bit sequence, the original two or more PUCCHs cannot be used to carry the finally output total bit sequence, and therefore, a new PUCCH needs to be determined to carry the total bit sequence.

The PUSCH is used to carry uplink data and/or aperiodic CSI. For a plurality of uplink carriers in a same PUCCH group, if the PUCCH and the PUSCH overlap at a same moment, the PUCCH and the PUSCH cannot be sent at the same time regardless of whether the PUCCH and the PUSCH are on a same uplink carrier. According to different UCI content carried on PUCCHs, the UCI may be sent together with data on the PUSCH. This process is called UCI piggyback. Alternatively, the UCI is multiplexed onto the PUSCH. Alternatively, the UCI may be discarded, and only the PUSCH is sent.

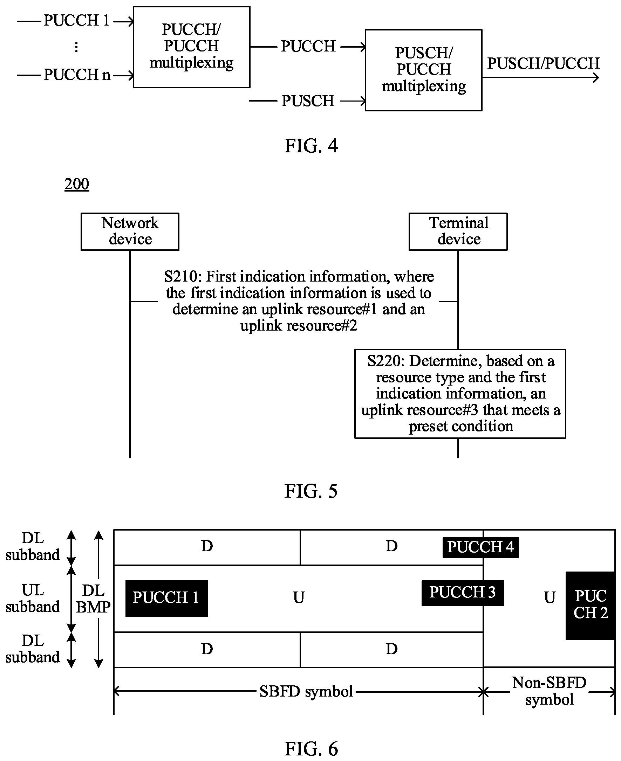

FIG. 4 is a flowchart of the foregoing uplink multiplexing. As shown in FIG. 4, if there are a plurality of PUCCHs that overlap in time, UCI carried on the plurality of PUCCHs needs to be first multiplexed onto one PUCCH. The PUCCH may be any one of the plurality of PUCCHs, or may be a re-determined PUCCH. In addition, if the PUCCH and the PUSCH overlap at a same moment, and then multiplexing between the PUCCH and the PUSCH is performed, a final output result may be a PUCCH or a PUSCH. It can be learned from the foregoing that the PUSCH may carry or not carry the UCI on the PUCCH.

Therefore, to ensure design integrity of the communication system, if a plurality of uplink resources need to be sent in a hybrid slot in which both an SBFD symbol and a non-SBFD symbol are present, it further needs to be determined whether the plurality of uplink resources overlap in time; and if the plurality of uplink resources overlap in time, an uplink resource needs to be re-determined, and information carried on the plurality of uplink resources that overlap in time domain is multiplexed onto the re-determined uplink resource for sending. How to determine, in the hybrid slot, an uplink resource after multiplexing remains an urgent problem to be resolved.

FIG. 5 is a schematic flowchart of a communication method 200 according to an embodiment of this application. As shown in FIG. 5, the method 200 may include the following steps.

S210: A network device sends first indication information to a terminal device, where the first indication information is used to determine an uplink resource#1 and an uplink resource#2. Correspondingly, the terminal device receives the first indication information from the network device.

The first indication information indicates an SBFD parameter, a parameter of an uplink resource used for non-SBFD, and a parameter of an uplink resource used for SBFD. The terminal device may determine, based on the parameter of the uplink resource used for SBFD, the uplink resource#1 used for an SBFD slot, and determine, based on the parameter of the uplink resource used for non-SBFD, the uplink resource#2 used for a non-SBFD slot. The uplink resource#1 is an example of a first resource, and the uplink resource#2 is an example of a second resource.

The SBFD parameter includes but is not limited to the following parameters: an SBFD slot index and an SBFD subband position in the SBFD slot. The SBFD slot may be a partial slot in a DL slot or a UL slot configured in a TDD parameter, or may be a slot different from three types of slots in the TDD parameter. The SBFD subband (subband) position may be a frequency-domain position of a UL subband and/or a DL subband.

The parameter of the uplink resource used for non-SBFD includes but is not limited to the following parameters: a time-domain position of the uplink resource, a frequency-domain position of the uplink resource, and the like. The parameter of the uplink resource used for non-SBFD may be one or more of an RRC parameter, a MAC-CE parameter, and DCI.

The parameter of the uplink resource used for SBFD may be configured in the following two manners:
Manner 1: The parameter is configured in a same manner as "the parameter of the uplink resource used for non-SBFD", including but not limited to a time-domain position of the uplink resource used for SBFD, a frequency-domain position of the uplink resource used for SBFD, and the like. That is, the uplink resource used for non-SBFD and the uplink resource used for SBFD are separately configured. In this case, the parameter of the uplink resource used for SBFD may be one or more of an RRC parameter, a MAC-CE parameter, or DCI.

Manner 2: Based on the "parameter of the uplink resource used for non-SBFD", a frequency-domain offset is further configured for the uplink resource used for SBFD. The frequency-domain offset may be separately configured for each "uplink resource used for non-SBFD", or may be a common frequency-domain offset configured for all "uplink resources used for non-SBFD". The frequency-domain offset may be independently configured for a specific cell, may be independently configured for a specific carrier, may be independently configured for a specific bandwidth part BWP, may be separately configured for each PUCCH format, or may be separately configured for each PUCCH resource. The frequency-domain offset is configured for the uplink resource used for SBFD relative to the uplink resource used for non-SBFD. In other words, the "uplink resource used for SBFD" may be obtained by adding a value of the configured frequency-domain offset to the "uplink resource used for non-SBFD".

It should be understood that, when the network device uses the configuration manner of Manner 1, the parameter of the uplink resource used for SBFD sent by the network device to the terminal device includes but is not limited to the time-domain position of the uplink resource used for SBFD, the frequency-domain position of the uplink resource used for SBFD, and the like. When the network device uses the configuration manner of Manner 2, the parameter of the uplink resource used for SBFD sent by the network device to the terminal device includes a frequency-domain offset used for SBFD, so that the uplink resource used for SBFD may be configured by adding a value of the frequency-domain offset to the uplink resource used for non-SBFD.

The parameter of the uplink resource used for SBFD is used to determine an uplink resource used for the SBFD slot, and the parameter of the uplink resource used for non-SBFD is used to determine an uplink resource used for the non-SBFD slot.

S220: The terminal device determines, based on a resource type and the first indication information, an uplink resource#3 that meets a preset condition.

In a possible implementation, the terminal device determines, based on the first indication information, the uplink resource#1 and the uplink resource#2, in a first slot, that correspond to first uplink information, where the first slot includes a subband full duplex SBFD symbol and a non-SBFD symbol, the uplink resource#1 is used for the SBFD slot, the uplink resource#2 is used for the non-SBFD slot, the SBFD slot does not include the non-SBFD symbol, and the non-SBFD slot does not include the SBFD symbol; and sends the first uplink information on the uplink resource#3 that meets the preset condition in the first slot, where the preset condition is used to determine one of the uplink resource#1 and the uplink resource#2 as the uplink resource#3. The uplink resource#3 is an example of a third resource. Correspondingly, the network device receives the first uplink information from the terminal device.

The uplink resource#1 is a resource determined in the uplink resource used for the SBFD slot, and the uplink resource#2 is a resource determined in the uplink resource used for the non-SBFD slot.

It may be understood that a slot includes symbols. For example, one slot may include 14 or 12 symbols. Therefore, the uplink resource#1 may be a resource, determined based on the first indication information, used for the SBFD symbol, the uplink resource#2 may be a resource, determined based on the first indication information, used for the non-SBFD symbol, and both the uplink resource#1 and the uplink resource#2 may be used to transmit the first uplink information.

Specifically, for a slot in which both the SBFD symbol and the non-SBFD symbol are present, the terminal device determines the uplink resource#3 based on the resource type and the parameter indicated by the first indication information. The resource type includes the resource used for the SBFD symbol and the resource used for the non-SBFD symbol.

The uplink resource may include a resource used for uplink transmission, such as a PUCCH or a PUSCH.

When the parameter, indicated by the first indication information, of the uplink resource used for SBFD does not include the frequency-domain offset, or when the network device independently configures, in Manner 1, the uplink resource#1 used for SBFD and the uplink resource#2 used for non-SBFD, one of the uplink resource#1 and the uplink resource#2 may be determined in a hybrid slot based on the following preset condition. The determined uplink resource is the uplink resource#3, and the first uplink information is transmitted on the uplink resource#3.

In a possible implementation, the uplink resource#3 is an uplink resource that meets a first condition. The first condition is that the uplink resource#3 is one of the uplink resource#1 and the uplink resource#2 that has an earlier start symbol in time domain.

For example, the slot 3 in FIG. 3 is used as an example for description. It can be learned from the foregoing that the slot 3 is a hybrid slot in which both the SBFD symbol and the non-SBFD symbol are present. When UCI#1 information needs to be transmitted, a PUCCH needs to be determined to transmit the UCI#1. The terminal device determines, based on the first indication information, the PUCCH#1 used for the SBFD slot and the PUCCH#2 used for the non-SBFD slot, and determines, based on a time-domain position of the PUCCH#1 used for the SBFD slot and a time-domain position of the PUCCH#2 used for the non-SBFD slot that are indicated by the first indication information, that the PUCCH#1 that has an earlier time-domain position in the PUCCH#1 and the PUCCH#2 in the slot 3 is to be used to transmit the UCI#1.

In a possible implementation, the uplink resource#3 is an uplink resource that meets a second condition. The second condition is that the uplink resource#3 is one of the uplink resource#1 and the uplink resource#2 that is indicated by the network device or that is predefined in a protocol. In other words, the uplink resource#3 is one of the uplink resource#1 and the uplink resource#2 that is indicated by the network device or that is predefined in the protocol.

For example, the slot 3 in FIG. 3 is used as an example for description. It can be learned from the foregoing that the slot 3 is a hybrid slot in which both the SBFD symbol and the non-SBFD symbol are present. When UCI#1 information needs to be transmitted, a PUCCH needs to be determined to transmit the UCI#1. The terminal device determines, based on the first indication information, the PUCCH#1 used for the SBFD slot and the PUCCH#2 used for the non-SBFD slot, and may determine, based on an indication of the network device or a protocol predefinition, to use the PUCCH#1 or the PUCCH#2. For example, if the network device indicates or the protocol predefines that the PUCCH#1 is to be used, the terminal device finally determines to use the PUCCH#1 to transmit the UCI#1. If the network device indicates or the protocol predefines that the PUCCH#2 is to be used, the terminal device finally determines to use the PUCCH#2 to transmit the UCI#1.

In a possible implementation, when the uplink resource#1 used for the SBFD slot and the uplink resource#2 used for the non-SBFD slot have a same start symbol in time domain, the uplink resource#3 may alternatively be one of the uplink resource#1 and the uplink resource#2 that meets the second condition.

For example, the slot 3 in FIG. 3 is used as an example for description. It can be learned from the foregoing that the slot 3 is a hybrid slot in which both the SBFD symbol and the non-SBFD symbol are present. When UCI#1 information needs to be transmitted, a PUCCH needs to be determined to transmit the UCI#1. The terminal device determines, based on the first indication information, the PUCCH#1 used for the SBFD slot and the PUCCH#2 used for the non-SBFD slot, and determines, based on a time-domain position of the PUCCH#1 used for the SBFD slot and a time-domain position of the PUCCH#2 used for the non-SBFD slot that are indicated by the first indication information, that the PUCCH#1 and the PUCCH#2 have the same start symbol. The terminal device may determine, based on an indication of the network device or a protocol predefinition, to use the PUCCH#1 or the PUCCH#2. For example, if the network device indicates or the protocol predefines that the PUCCH#1 is to be used, the terminal device finally determines to use the PUCCH#1 to transmit the UCI#1. If the network device indicates or the protocol predefines that the PUCCH#2 is to be used, the terminal device finally determines to use the PUCCH#2 to transmit the UCI#1.

In a possible implementation, when the uplink resource#3 is one of the uplink resource#1 and the uplink resource#2 that is indicated by the network device, the terminal device may further receive downlink control information DCI from the network device. Correspondingly, the network device may further send the DCI to the terminal device. The uplink resource#3 is one of the uplink resource#1 and the uplink resource#2 that is indicated by the DCI. The uplink resource#3 is an uplink resource that meets a third condition. The third condition is that the uplink resource#3 is one of the uplink resource#1 and the uplink resource#2 that is indicated by the DCI.

Specifically, the terminal device may further receive DCI information for semi-persistent scheduling (Semi-persistent Scheduling, SPS) from the network device. The terminal device needs to receive an SPS PDSCH in response to the DCI information, and send SPS PDSCH HARQ-ACK feedback information to the network device. Therefore, the terminal device needs to determine a PUCCH to transmit the SPS PDSCH HARQ-ACK feedback information. That is, when the PUCCH is used to transmit an SPS PDSCH HARQ-ACK message, where for ease of description, the PUCCH resource used to transmit the SPS PDSCH HARQ-ACK message is referred to as an SPS PDSCH HARQ-ACK PUCCH resource, the terminal device may indicate one of the uplink resource#1 and the uplink resource#2 based on a PUCCH resource indication field in DCI for SPS transmission activation. In other words, the uplink resource#3 may be one of the uplink resource#1 and the uplink resource#2 that is indicated by the DCI for semi-persistent scheduling. In other words, the uplink resource#3 is an uplink resource that meets the third condition. The third condition is that the uplink resource#3 is one of the uplink resource#1 and the uplink resource#2 that is indicated by the PUCCH resource indication field in the DCI for SPS transmission activation. In addition, for DCI information dynamically sent by the network device, the terminal device may determine one of the uplink resource#1 and the uplink resource#2 that is dynamically indicated by the DCI as the uplink resource#3. In conclusion, the uplink resource#3 may be one of the uplink resource#1 and the uplink resource#2 that is indicated by the DCI.

For example, the slot 3 in FIG. 3 is used as an example for description. It can be learned from the foregoing that the slot 3 is a hybrid slot in which both the SBFD symbol and the non-SBFD symbol are present. When feedback information HARQ-ACK#1 corresponding to DCI#1 needs to be transmitted, a PUCCH needs to be determined to transmit the HARQ-ACK#1. The terminal device may determine, based on the first indication information, the PUCCH#1 used for the SBFD slot and the PUCCH#2 used for the non-SBFD slot. The terminal device may determine, based on an indication of the PUCCH resource indication field in the DCI for SPS transmission activation, to use the PUCCH#1, that is, an uplink resource used for the SBFD symbol, to transmit the HARQ-ACK#1; or the terminal device may determine, based on an indication of the PUCCH resource indication field in the DCI for SPS transmission activation, to use the PUCCH#2, that is, a resource used for the non-SBFD symbol, to transmit the HARQ-ACK#1.

In a possible implementation, the uplink resource#3 is an uplink resource that meets a fourth condition. The fourth condition is that the uplink resource#3 is one of the uplink resource#1 and the uplink resource#2 that has a same slot type as a resource#4, the resource#4 is used to carry first downlink information, and the first uplink information includes feedback information for the first downlink information. The resource#4 is an example of a fourth resource.

Specifically, when the first uplink information is feedback information HARQ-ACK for a PDSCH corresponding to the DCI, the terminal device may determine, from the uplink resource#1 and the uplink resource#2 based on a symbol (slot) type of a physical downlink shared channel (physical downlink shared channel, PDSCH) resource (resource#4), that one of the uplink resource#1 and the uplink resource#2 that has a same symbol type as the PDSCH resource is the uplink resource#3. In other words, the uplink resource#3 is an uplink resource that meets the fourth condition. The fourth condition is that the uplink resource#3 is a HARQ-ACK PUCCH resource that has a same symbol type as the PDSCH. The symbol (or slot) type includes the SBFD symbol and the non-SBFD symbol mentioned above. The HARQ-ACK PUCCH resource is an example of the uplink resource#3.

For example, the slot 3 in FIG. 3 is used as an example for description. It can be learned from the foregoing that the slot 3 is a hybrid slot in which both the SBFD symbol and the non-SBFD symbol are present. When feedback information HARQ-ACK#1 corresponding to DCI#1 needs to be transmitted, a PUCCH needs to be determined to transmit the HARQ-ACK#1. The terminal device may determine, based on the first indication information, the PUCCH#1 used for the SBFD slot and the PUCCH#2 used for the non-SBFD slot. The terminal device may determine, from the uplink resource#1 and the uplink resource#2, that one of the uplink resource#1 and the uplink resource#2 that has a same symbol type as the PDSCH is the uplink resource#3, where the PDSCH is a resource used to transmit the DCI#1, and the uplink resource#3 is used to transmit the feedback information HARQ-ACK#1 for the DCI#1. If the symbol type of the PDSCH is an SBFD symbol, the uplink resource#3 is the PUCCH#1. If the symbol type of the PDSCH is a non-SBFD symbol, the uplink resource#3 is the PUCCH#2.

When the parameter, indicated by the first indication information, of the uplink resource used for SBFD includes the frequency-domain offset, or when the network device configures, in Manner 2, the uplink resource#1 used for the SBFD slot, that is, when the uplink resource#1 used for the SBFD slot is obtained by adding the frequency-domain offset to the uplink resource#2 used for the non-SBFD slot, one of the uplink resource#1 and the uplink resource#2 may be determined in a hybrid slot based on the following preset conditions. The determined uplink resource is the uplink resource#3, and the first uplink information is transmitted on the uplink resource#3.

In a possible implementation, the terminal device may determine the uplink resource#3 based on the frequency-domain offset. Specifically, the protocol predefines or the network device indicates whether the frequency-domain offset is to be used to configure the uplink resource used for the SBFD slot. When the uplink resource used for the SBFD slot is obtained by adding the frequency-domain offset to the uplink resource used for the non-SBFD slot, the uplink resource used for the SBFD slot has a frequency-domain offset, that is, that the frequency-domain offset takes effect indicates that the "uplink resource used for the SBFD slot" is to be used; and the uplink resource used for the non-SBFD slot does not have a frequency-domain offset, that is, that the frequency-domain offset does not take effect indicates that the "uplink resource used for the non-SBFD slot" is to be used. Whether the frequency-domain offset takes effect may be understood as whether the uplink resource has a frequency-domain offset. For example, it can be learned from the foregoing that the terminal device configures the "uplink resource used for the SBFD slot" by adding the configured frequency-domain offset to the "uplink resource used for the non-SBFD slot". Therefore, the "uplink resource used for the SBFD slot" has a frequency-domain offset, and the "uplink resource used for the non-SBFD slot" does not have a frequency-domain offset. Therefore, the terminal device may determine the uplink resource#3 based on whether the frequency-domain offset occurs. When the network device indicates or the protocol predefines that the uplink resource used for the SBFD slot is configured by using the frequency-domain offset, the uplink resource#3 is the uplink resource#1 used for the SBFD slot that has a frequency-domain offset. If the network device indicates or the protocol predefines that the uplink resource used for the SBFD slot is not configured by using the frequency-domain offset, the uplink resource#3 is the uplink resource#2 used for the non-SBFD slot that does not have a frequency-domain offset. The uplink resource#3 is one of the uplink resource#1 and the uplink resource#2 that meets a fifth condition. The fifth condition is that the uplink resource#3 is one of the uplink resource#1 and the uplink resource#2 that has a frequency-domain offset or does not have a frequency-domain offset.

For example, the slot 3 in FIG. 3 is used as an example for description. It can be learned from the foregoing that the slot 3 is a hybrid slot in which both the SBFD symbol and the non-SBFD symbol are present. When UCI#1 information needs to be transmitted, a PUCCH needs to be determined to transmit the UCI#1. The terminal device may determine, based on the first indication information, the PUCCH#1 used for the SBFD slot and the PUCCH#2 used for the non-SBFD slot. When the network device indicates or the protocol specifies that the uplink resource used for the SBFD slot is configured by using the frequency-domain offset, the uplink resource used for the SBFD slot has a frequency-domain offset. For example, the uplink resource PUCCH#2 used by the network device for the non-SBFD slot occupies 10 RBs (RB#n to RB#n+9) in frequency domain, and the frequency-domain offset is 5 RBs. Because the uplink resource used for the SBFD slot is configured by using the frequency-domain offset, the uplink resource PUCCH#1 used for the SBFD slot occupies 10 RBs (RB#n+5 to RB#n+14) in frequency domain. Therefore, the terminal device transmits the UCI#1 on the PUCCH#1 (the RB#n+5 to the RB#n+14) used for the SBFD slot that has a frequency-domain offset. In a possible case, when a possible bandwidth of the PUCCH#2 is an entire BWP bandwidth, that is, an entire uplink bandwidth in frequency domain of the non-SBFD symbol in the DL BWP in the slot 3, the PUCCH#2 does not have a frequency-domain offset. Therefore, it is finally determined that the PUCCH#1 is used to transmit the UCI#1. On the contrary, if the terminal device does not use the frequency-domain offset to configure the uplink resource used for the SBFD slot, the terminal device transmits the UCI#1 on the PUCCH#2 used for the non-SBFD slot that does not have a frequency-domain offset.

It should be noted that, when the network device configures, in Manner 2, the uplink resource used for the SBFD slot, the uplink resource#1 used for the SBFD slot and the uplink resource#2 used for the non-SBFD slot definitely occupy same symbols in time domain, to be specific, start symbols and end symbols are the same, quantities of occupied symbols are the same, and a difference lies only in frequency-domain positions. For example, the start symbols and the end symbols occupied by the PUCCH#1 and the PUCCH#2 are completely the same. Therefore, the terminal device may determine, based on whether the PUCCH#1 or the PUCCH#2 has a frequency-domain offset regarding the frequency-domain position, to use the PUCCH#1 or the PUCCH#2. For details, refer to the foregoing descriptions of determining, based on the frequency-domain offset, the uplink resource#3 to be used. Details are not described herein again.

It should be further noted that whether the frequency-domain offset takes effect may indicate to use the uplink resource used for the SBFD slot or the uplink resource used for the non-SBFD slot. That is, "the frequency-domain offset takes effect" indicates that the "uplink resource used for the SBFD slot" is to be used, and "the frequency-domain offset does not take effect" indicates that the "uplink resource used for the non-SBFD slot" is to be used.

It should be noted that, when the uplink resource#1 and the uplink resource#2 have the same start symbol, that is, when the uplink resource#1 and the uplink resource#2 have a same start position in time domain, the terminal device may determine, based on the second condition and/or the third condition and/or the fourth condition and/or the fifth condition, one of the uplink resource#1 and the uplink resource#2 to send the first uplink information. For example, when the uplink resource#1 and the uplink resource#2 have the same start symbol, one of the uplink resource#1 and the uplink resource#2 that is indicated by the network device or that is predefined in the protocol is determined as the uplink resource#3. When the uplink resource#1 and the uplink resource#2 have different start symbols, that is, the uplink resource#1 and the uplink resource#2 have different start positions in time domain, the terminal device may directly determine, based on the second condition and/or the third condition and/or the fourth condition, to use the uplink resource#1 or the uplink resource#2. In other words, the foregoing preset conditions may be jointly used to determine the uplink resource#3, or the foregoing preset conditions may be separately used to determine the uplink resource#3. This is not limited in this application.

In a possible implementation, the terminal device may determine, for a specific type of uplink information, the uplink resource#3 that meets a part of the foregoing preset conditions. For uplink information other than the specific type, the uplink resource#3 may be determined based on conditions other than the preset conditions.

For example, the terminal device may determine, for a specific type of UCI, the uplink resource#3 that meets the first condition. For example, for an SPS PDSCH HARQ-ACK, a scheduling request (scheduling request, SR), and channel state information (channel state information, CSI) that are semi-statically configured by using RRC signaling, the uplink resource#3 that meets the first condition may be determined based on the first condition. For UCI that has a PUCCH resource dynamically indicated by DCI, a PUCCH carrying the UCI may be directly indicated by the DCI.

In a possible implementation, for different types of uplink information, the terminal device may determine the uplink resource#3 based on different preset conditions.

For example, the UCI may be a HARQ-ACK, an SR, or CSI. For the HARQ-ACK, the PUCCH#1 that meets the first condition may be determined from the PUCCH#1 and the PUCCH#2 based on the first condition; and for the SR and the CSI, the PUCCH#2 that meets the second condition may be determined from the PUCCH#1 and the PUCCH#2 based on the second condition. It should be understood that the foregoing PUCCH carrying the HARQ-ACK, the SR, and the CSI is merely an example. Alternatively, for the HARQ-ACK, the PUCCH#2 that meets the second condition may be determined from the PUCCH#1 and the PUCCH#2 based on the second condition; and for the SR and the CSI, the PUCCH#1 that meets the first condition may be determined from the PUCCH#1 and the PUCCH#2 based on the first condition.

According to the foregoing solution, in the slot in which both the SBFD symbol and the non-SBFD symbol are present, the terminal device may determine, based on the preset condition, one of the uplink resource#1 used for the SBFD slot and the uplink resource#2 used for the non-SBFD slot as the uplink resource#3, to transmit the first uplink information. This achieves a balance between scheduling flexibility and signaling overhead, thereby improving an SBFD system design. In addition, for different uplink information, uplink resources for transmitting the uplink information may be determined based on different preset conditions, and a manner of using the conditions is more flexible.

In a possible implementation, the terminal device may determine, based on whether the uplink resource is valid, one of the uplink resource#1 and the uplink resource#2 as the uplink resource#3. In other words, the uplink resource#3 is an uplink resource that meets a sixth condition. The sixth condition is that the uplink resource#3 is one of the uplink resource#1 and the uplink resource#2 that is valid.

Whether the uplink resource is valid is defined as follows.

Definition 1: A time-domain symbol index of the uplink resource#1 used for the SBFD slot does not include an index of the non-SBFD symbol in the first slot, a time-domain symbol index of the uplink resource#2 used for the non-SBFD slot does not include an index of the SBFD symbol in the first slot, and the first slot is a hybrid slot including the SBFD symbol and the non-SBFD symbol. In other words, the uplink resource#1 is considered valid if all symbols of the uplink resource#1 in the first slot are SBFD symbols, and the uplink resource#2 is considered valid if all symbols of the uplink resource#2 in the first slot are non-SBFD symbols.

Definition 2: Both the uplink resource#1 used for the SBFD slot and the uplink resource#2 used for the non-SBFD slot are available for uplink transmission. To be specific, all time-frequency resources of the uplink resource#1 are available for uplink transmission, and all time-frequency resources of the uplink resource#2 are available for uplink transmission. In other words, all time-frequency resources of the uplink resource#1 and the uplink resource#2 are uplink resources. That is, the valid uplink resource#1 is a resource that is available for uplink transmission, and the valid uplink resource#2 is a resource that is available for uplink transmission.

For example, FIG. 6 is a diagram of PUCCH resources in a hybrid slot. As shown in FIG. 6, according to Definition 1, it can be learned that, in time domain, all symbols of a PUCCH#1 are SBFD symbols, and all symbols of a PUCCH#2 are non-SBFD symbols. However, symbols of a PUCCH#3 and a PUCCH#4 include both an SBFD symbol and a non-SBFD symbol. Therefore, both the PUCCH#3 and the PUCCH#4 are invalid resources. Because neither the PUCCH#3 nor the PUCCH#4 is a resource for any type of symbol, the terminal device does not determine one resource from the PUCCH#3 and the PUCCH#4. The PUCCH#1 is a valid uplink resource used for SBFD, but is an invalid uplink resource used for non-SBFD. The PUCCH#2 is a valid uplink resource used for non-SBFD, but is an invalid uplink resource used for SBFD. According to Definition 2, all time-frequency resources of the PUCCH#1, the PUCCH#2, and the PUCCH#3 are uplink resources, and therefore the PUCCH#1 to the PUCCH#3 are all valid resources; and a part of frequency-domain resources of the PUCCH#4 are not uplink resources, and therefore the PUCCH#4 is an invalid resource.

It should be understood that the uplink resource#3 is a valid uplink resource determined, by the terminal device based on parameter information indicated by the first indication information, by selecting from a plurality of uplink resources configured by the network device.

In a possible implementation, when only the uplink resource#1 in the uplink resource#1 used for the SBFD slot and the uplink resource#2 used for the non-SBFD slot is valid, the uplink resource#3 is the uplink resource#1; or when only the uplink resource#2 in the uplink resource#1 used for the SBFD slot and the uplink resource#2 used for the non-SBFD slot is valid, the uplink resource#3 is the uplink resource#2.

In a possible implementation, when both the uplink resource#1 used for the SBFD slot and the uplink resource#2 used for the non-SBFD slot are valid resources, the terminal device may determine, based on the first condition to the fifth condition, one of the uplink resource#1 and the uplink resource#2 in the first slot as the uplink resource#3.

In a possible implementation, when both the uplink resource#1 used for the SBFD slot and the uplink resource#2 used for the non-SBFD slot are invalid resources, and uplink information#1 is to be sent in the first slot, the terminal device may not send the uplink information#1; or the uplink information#1 is multiplexed onto an uplink resource carrying uplink information#2 for sending.

According to the foregoing solution, in the hybrid slot, in an SBFD system, in which both the SBFD symbol and the non-SBFD symbol are present, the terminal device may determine, based on a validity definition condition, whether the uplink resource#1 used for the SBFD slot and the uplink resource#2 used for the non-SBFD slot are valid. If only one of the uplink resources is valid, the uplink resource is used as the uplink resource#3 to send the first uplink information. When both the uplink resource#1 and the uplink resource#2 are valid resources, one of the uplink resource#1 and the uplink resource#2 is determined based on the first condition to the fifth condition to send the first uplink information, to ensure that a finally obtained uplink resource is valid, in other words, the uplink resource is available for uplink transmission. This can effectively guarantee operation of the system and further improve the SBFD system design.

According to the foregoing solution, in a hybrid slot of the SBFD system, if UCI#1 is to be transmitted, which uplink resource to be used for transmitting the UCI#1 may be determined, based on the first condition to the sixth condition mentioned above, from the uplink resource#1 used for the SBFD slot and the uplink resource#2 used for the non-SBFD slot. However, in an actual communication system, a plurality of different pieces of UCI are to be transmitted, and the plurality of different pieces of UCI may be transmitted on a plurality of PUCCHs. To be specific, UCI#1 may be sent on a PUCCH#1, UCI#2 may be sent on a PUCCH#2, UCI#3 may be sent on a PUCCH#3, and the like. However, these PUCCHs carrying the different UCI may overlap in time domain. It can be learned from the foregoing that, when these PUCCHs overlap in time domain, the different UCI need to be multiplexed onto one PUCCH. The PUCCH may be any one of the plurality of PUCCHs carrying the different UCI, or the PUCCH may be a re-determined PUCCH. Therefore, when a PUCCH needs to be re-determined to send multiplexed UCI, for the multiplexing procedure mentioned above, there are several manners below for determining uplink resources before and after multiplexing.

### Manner 1

1. Before multiplexing, in the first slot, for a plurality of different pieces of uplink information, the first uplink information and second uplink information being used for description, it can be learned from the foregoing that the uplink resource#3 used to send the first uplink information may be determined based on the first condition to the fifth condition mentioned above, and similarly, an uplink resource#4 used to send the second uplink information may also be determined based on the first condition to the fifth condition mentioned above.
   For example, before multiplexing, that is, when a plurality of different pieces of UCI are to be transmitted, in the hybrid slot in which both the SBFD symbol and the non-SBFD symbol are present, the terminal device may determine, based on the first condition to the fifth condition, a plurality of PUCCHs for respectively transmitting the plurality of different pieces of UCI. For example, the terminal device determines, based on the first condition to the fifth condition, that UCI#1 is transmitted on a PUCCH#1, UCI#2 is transmitted on a PUCCH#2, and UCI#n is transmitted on a PUCCH#n, where n≥2.
2. It is determined whether uplink resources carrying different uplink information overlap in time domain. If the uplink resources overlap, multiplexing is performed. To be specific, the uplink information carried on the plurality of uplink resources that overlap in time domain is concatenated through encoding, to obtain a total bit sequence. Because the total bit sequence is larger than a maximum payload size of each of the plurality of overlapping uplink resources, an uplink resource needs to be re-determined to transmit the total bit sequence. For example, when the uplink resource#3 and the uplink resource#4 overlap in time domain, multiplexing is performed.
   For example, the terminal device determines, based on the parameter of the uplink resource used for SBFD and the parameter of the uplink resource used for non-SBFD that are indicated by the first indication information, whether the n PUCCHs overlap in time domain. If the n PUCCHs overlap, multiplexing needs to be performed. For example, if the PUCCH#1 and the PUCCH#j overlap in time domain, the UCI#1 and the UCI#j need to be multiplexed onto a new PUCCH, where 2≤j≤n. To be specific, the UCI#1 and the UCI#j may be concatenated and then jointly encoded or independently encoded and then concatenated. A finally output total bit sequence needs to be mapped to a new PUCCH, and the terminal device needs to determine the new PUCCH after multiplexing.
3. After multiplexing, in the first slot, for the total bit sequence, if the terminal device determines, based on the sixth condition, that only one of the uplink resource#1 and the uplink resource#2 is valid, an uplink resource#5 used to transmit the total bit sequence may be the valid uplink resource#1 or the valid uplink resource#2. If the terminal device determines, based on the sixth condition, that both the uplink resource#1 and the uplink resource#2 are valid resources, the terminal device may further determine, based on the first condition to the fifth condition, one of the uplink resource#1 and the uplink resource#2 as the uplink resource#5, where the uplink resource#5 is used to transmit the total bit sequence.

For example, after multiplexing, that is, when the total bit sequence needs to be mapped to the new PUCCH, the terminal device may determine, based on the sixth condition, a valid one from the PUCCH#1 used for the SBFD slot and the PUCCH#2 used for the non-SBFD slot, to transmit the total bit sequence. If there are two valid PUCCHs determined by the terminal device based on the sixth condition, that is, both the PUCCH#1 and the PUCCH#2 are valid resources, the terminal device may further determine, based on the first condition to the fifth condition, that one of the two valid PUCCHs is to be used to transmit the total bit sequence.

For brevity, the following describes the multiplexing procedure in the hybrid slot by using an example in which the uplink information is UCI and the uplink resource is a PUCCH.

### Manner 2

1. Before multiplexing, in the first slot, that is, when a plurality of different pieces of UCI are to be transmitted, a plurality of PUCCHs for respectively transmitting the different UCI may be determined based on the sixth condition. For example, the terminal device determines, based on the sixth condition, that UCI#1 is transmitted on a PUCCH#1, UCI#2 is transmitted on a PUCCH#2, and UCI#n is transmitted on a PUCCH#n, where n≥2. Each of the plurality of PUCCHs is a valid one in the PUCCH#1 used for the SBFD slot and the PUCCH#2 used for the non-SBFD slot that are determined based on the sixth condition. If both the PUCCH#1 used for the SBFD slot and the PUCCH#2 used for the non-SBFD slot that are determined by the terminal device based on the sixth condition are valid resources, the terminal device further determines, from the PUCCH#1 and the PUCCH#2 based on the first condition to the fifth condition, a PUCCH used to transmit each UCI.
2. The terminal device determines, based on the parameter indicated by the first indication information, whether the n PUCCHs overlap in time domain. If the n PUCCHs overlap, multiplexing needs to be performed. For example, if the PUCCH#1 and the PUCCH#j overlap in time domain, the UCI#1 and the UCI#j need to be multiplexed onto a new PUCCH, where 2≤j≤n. To be specific, the UCI#1 and the UCI#j may be concatenated and then jointly encoded or independently encoded and then concatenated. A finally output total bit sequence needs to be mapped to a new PUCCH, and the terminal device needs to determine the PUCCH after multiplexing.
3. After multiplexing, in the first slot, that is, when the total bit sequence needs to be mapped to the new PUCCH, the terminal device may determine, based on the sixth condition, a valid PUCCH from the PUCCH#1 used for the SBFD slot and the PUCCH#2 used for the non-SBFD slot, that is, the PUCCH#1 or the PUCCH#2, to transmit the total bit sequence. If there are two valid PUCCHs determined by the terminal device based on the sixth condition, that is, both the PUCCH#1 and the PUCCH#2 are valid resources, the terminal device may further determine, based on the first condition to the fifth condition, that one of the two valid PUCCHs is to be used to transmit the total bit sequence.

### Manner 3

1. Before multiplexing, in the first slot, that is, when a plurality of different pieces of UCI are to be transmitted, the terminal device may determine, based on the first condition to the fifth condition, a plurality of PUCCHs for respectively transmitting the plurality of different pieces of UCI. For example, the terminal device determines, based on the first condition to the fifth condition, that UCI#1 is transmitted on a PUCCH#1, UCI#2 is transmitted on a PUCCH#2, and UCI#n is transmitted on a PUCCH#n, where n≥2.
2. The terminal device determines, based on the parameter indicated by the first indication information, whether the n PUCCHs overlap in time domain. If the n PUCCHs overlap, multiplexing needs to be performed. For example, if the PUCCH#1 and the PUCCH#j overlap in time domain, the UCI#1 and the UCI#j need to be multiplexed onto a new PUCCH, where 2≤j≤n. To be specific, the UCI#1 and the UCI#j may be concatenated and then jointly encoded or independently encoded and then concatenated. A finally output total bit sequence needs to be mapped to a new PUCCH, and the terminal device needs to determine the PUCCH after multiplexing.
3. After multiplexing, in the first slot, that is, when the total bit sequence needs to be mapped to the new PUCCH, the terminal device may determine, based on the first condition to the fifth condition, that one of the PUCCH#1 used for the SBFD slot and the PUCCH#2 used for the non-SBFD slot is to be used to transmit the total bit sequence. In other words, the terminal device determines, in the first slot based on the first condition to the fifth condition, the PUCCH after multiplexing that is used to transmit the total bit sequence.

According to the foregoing solution, uplink resources before and after multiplexing are determined in the foregoing three manners, to improve a processing procedure of uplink multiplexing in the hybrid slot in which both the SBFD symbol and the non-SBFD symbol are present, thereby improving the SBFD system design.

The foregoing describes in detail the communication method provided in this application. The following describes communication apparatuses provided in this application.

To implement functions of the communication apparatuses (for example, the network device and the terminal device) in embodiments of this application, each communication apparatus may implement a corresponding function in a form of a hardware structure, a software module, or a combination of the hardware structure and the software module.

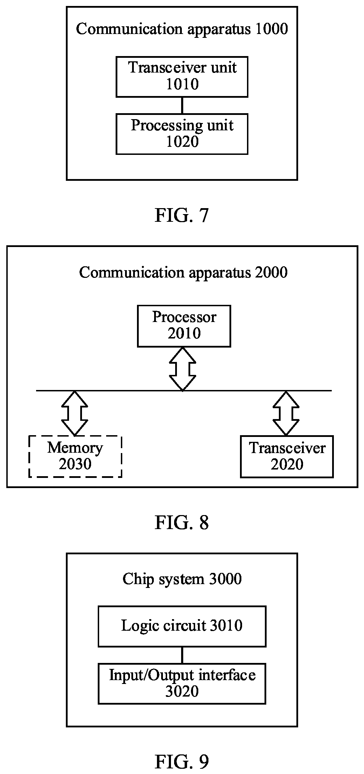

FIG. 7 is a block diagram of a communication apparatus 1000 according to an embodiment of this application. As shown in FIG. 7, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transmitting/receiving unit. The processing unit 1020 may be configured to determine a first uplink resource based on an uplink resource type and a parameter indicated by first indication information.

Optionally, the apparatus 1000 may further include a storage unit. The storage unit may be configured to store instructions and/or data. The processing unit 1020 may read the instructions and/or the data in the storage unit, to cause the apparatus to implement the foregoing method embodiments.

For example, the communication apparatus 1000 may be a terminal device, or may be a communication apparatus, for example, a chip, a chip system, or a circuit, that is used in the terminal device or used together with the terminal device and that can implement a method performed by the terminal device. For details, refer to related descriptions of a chip system shown in FIG. 9.

For example, the communication apparatus 1000 may be a network device, or may be a communication apparatus, for example, a chip, a chip system, or a circuit, that is used in the network device or used together with the network device and that can implement a method performed by the network device. For details, refer to related descriptions of a chip system shown in FIG. 9.

In a possible design, the apparatus 1000 may implement steps or procedures performed by the terminal device in the foregoing method embodiments. The processing unit 1020 is configured to perform a processing-related operation of the terminal device in the foregoing method embodiments. The transceiver unit 1010 is configured to perform a receiving/sending-related of the terminal device in the foregoing method embodiments.

For example, the transceiver unit 1010 is configured to receive the first indication information from the network device, where the first indication information indicates an SBFD parameter, a parameter of an uplink resource used for non-SBFD, and a parameter of an uplink resource used for SBFD. The processing unit 1020 is configured to determine an uplink resource#3 based on the uplink resource type and the parameter indicated by the first indication information.

In another possible design, the apparatus 1000 may implement steps or procedures performed by the network device in the foregoing method embodiments. The transceiver unit 1010 is configured to perform a receiving/sending-related operation of the network device in the foregoing method embodiments. The processing unit 1020 is configured to perform a processing-related operation of the network device in the foregoing method embodiments.

For example, the transceiver unit 1010 is configured to send the first indication information to the terminal device, where the first indication information indicates an SBFD parameter, a parameter of an uplink resource used for non-SBFD, and a parameter of an uplink resource used for SBFD.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 1000 may be specifically the transmit end in the foregoing embodiments, and may be configured to perform the processes and/or the steps corresponding to the transmit end in the foregoing method embodiments. Alternatively, the apparatus 1000 may be specifically the receive end in the foregoing embodiments, and may be configured to perform the processes and/or the steps corresponding to the receive end in the foregoing method embodiments. To avoid repetition, details are not described herein again.

The apparatus 1000 in the foregoing solutions has a function of implementing corresponding steps performed by the transmit end in the foregoing methods, or the apparatus 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a receiving/sending operation and a related processing operation in the method embodiments.

In addition, the transceiver unit may alternatively be a transceiver circuit (for example, may include a receiving circuit and a sending circuit), and the processing unit may be a processing circuit. In this embodiment of this application, the communication apparatus may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 8 is a block diagram of a communication apparatus 2000 according to an embodiment of this application. As shown in FIG. 8, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store the instructions. The processor 2010 may execute the instructions stored in the memory 2030.

For example, the communication apparatus 2000 may be a terminal device, or may be a communication apparatus, for example, a chip, a chip system, or a circuit, that is used in the terminal device or used together with the terminal device and that can implement a method performed by the terminal device. For details, refer to related descriptions of a chip system shown in FIG. 9.

For example, the communication apparatus 2000 may be a network device, or may be a communication apparatus, for example, a chip, a chip system, or a circuit, that is used in the network device or used together with the network device and that can implement a method performed by the network device. For details, refer to related descriptions of a chip system shown in FIG. 9.

In a possible implementation, the apparatus 2000 is configured to implement procedures and steps corresponding to the terminal device in the foregoing method embodiments.

In another possible implementation, the apparatus 2000 is configured to implement procedures and steps corresponding to the network device in the foregoing method embodiments.

Optionally, the memory 2030 may include a read-only memory and a random access memory, and provide instructions and data to the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform the steps and/or procedures in the foregoing method embodiments corresponding to the transmit end or the receive end.

In an implementation process, steps in the foregoing methods can be implemented by using a hardware integrated logic circuit in the processor, or by using instructions in a form of software. The steps in the method disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that the processor in this embodiment of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor, an application-specific integrated circuit, a field programmable gate array or another programmable logic device, a discrete gate or a transistor logic device, a discrete hardware component, the foregoing CPU, another general-purpose processor, a DSP, an ASIC, an FPGA or another coding-capable logic device, or a partial circuit used for a processing function in another chip. The processor in this embodiment of this application may implement or perform the methods, the steps, and the logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external high-speed cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

In embodiments of this application, the method in the foregoing embodiments may be performed by a terminal device and a network device, or may be performed by a chip, a chip system, or a circuit in the terminal device and the network device. The chip, the chip system, or the circuit may be installed in the terminal device and the network device. The following describes a chip system of a terminal device or a network device with reference to FIG. 9.

FIG. 9 is a block diagram of a chip system 3000 according to an embodiment of this application. As shown in FIG. 9, the chip system 3000 (or may be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, to cause the chip system 3000 to implement the methods and functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by the terminal device or the network device in the foregoing method embodiments.

For example, the logic circuit 3010 is configured to implement processing-related operations performed by the terminal device in the foregoing method embodiments, for example, processing-related operations performed by the terminal device in the foregoing embodiment. The input/output interface 3020 is configured to implement sending and/or receiving-related operations performed by the terminal device in the foregoing method embodiments, for example, sending and/or receiving-related operations performed by the terminal device in the foregoing embodiment.

For another example, the logic circuit 3010 is configured to implement processing-related operations performed by the network device in the foregoing method embodiments, for example, processing-related operations performed by the network device in the foregoing embodiment. The input/output interface 3020 is configured to implement sending and/or receiving-related operations performed by the network device in the foregoing method embodiments, for example, sending and/or receiving-related operations performed by the network device in the foregoing embodiment.

An embodiment of this application further provides a computer-readable storage medium, storing computer instructions for implementing the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device or the network device in the foregoing embodiments.

For explanations and beneficial effects of related content of any one of the apparatuses provided above, refer to the corresponding method embodiments provided above. Details are not described herein again.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for causing a computer device (which may be a personal computer, a server, a network device, or the like) to perform all or some of the steps of the methods described in embodiments of this application. The foregoing storage medium includes any medium that can store program code, for example, a USB flash drive, a portable hard drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A communication method, comprising:
receiving first indication information from a network device, wherein the first indication information is used to determine a first resource and a second resource in a first slot, wherein the first resource and the second resource correspond to first uplink information, the first slot comprises a subband full duplex SBFD symbol and a non-SBFD symbol, the first resource is used for an SBFD slot, and the second resource is used for a non-SBFD slot; and
sending the first uplink information on a third resource in the first slot, wherein the third resource is one of the first resource and the second resource.

**2.** The method according to claim 1, wherein sending the first uplink information on the third resource in the first slot comprises:
when a time-domain symbol index of the first resource does not comprise an index of the non-SBFD symbol in the first slot and a time-domain symbol index of the second resource does not comprise an index of the SBFD symbol in the first slot, and/or when both the first resource and the second resource are available for uplink transmission, sending the first uplink information on the third resource in the first slot.

**3.** The method according to claim 1, wherein the third resource being one of the first resource and the second resource comprises:

**4.** when a slot symbol index of the first resource comprises an index of the non-SBFD symbol in the first slot and/or the first resource is unavailable for uplink transmission, the third resource is the second resource, wherein a time-domain symbol index of the second resource does not comprise an index of the SBFD symbol in the first slot and/or the second resource is available for uplink transmission; or
when a slot symbol index of the second resource comprises an index of the SBFD symbol in the first slot and/or the second resource is unavailable for uplink transmission, the third resource is the first resource, wherein a time-domain symbol index of the first resource does not comprise an index of the non-SBFD symbol in the first slot and/or the first resource is available for uplink transmission.

**4.** The method according to claim 1 or 2, wherein the third resource being one of the first resource and the second resource comprises:
the third resource is one of the first resource and the second resource that has an earlier time-domain position; and/or
the third resource is one of the first resource and the second resource that is indicated by the network device; and/or
the third resource is one of the first resource and the second resource that is predefined in a protocol; and/or
the third resource is one of the first resource and the second resource that does not have a frequency-domain offset; and/or
the third resource is one of the first resource and the second resource that has a frequency-domain offset; and/or
the third resource is one of the first resource and the second resource that has a same slot type as a fourth resource, wherein the fourth resource is used to carry first downlink information, and the first uplink information comprises feedback information for the first downlink information.

**5.** The method according to claim 4, wherein when the third resource is one of the first resource and the second resource that is indicated by the network device, the method further comprises:
receiving downlink control information DCI, wherein the DCI indicates one of the first resource and the second resource that the third resource is.

**6.** A communication method, comprising:
sending first indication information to a terminal device, wherein the first indication information is used to determine a first resource and a second resource in a first slot, wherein the first resource and the second resource correspond to first uplink information, the first slot comprises a subband full duplex SBFD symbol and a non-SBFD symbol, the first resource is used for an SBFD slot, and the second resource is used for a non-SBFD slot; and
receiving the first uplink information on a third resource in the first slot, wherein the third resource is one of the first resource and the second resource.

**7.** The method according to claim 6, wherein receiving the first uplink information on the third resource in the first slot comprises:
when a time-domain symbol index of the first resource does not comprise an index of the non-SBFD symbol in the first slot and a time-domain symbol index of the second resource does not comprise an index of the SBFD symbol in the first slot, and/or when both the first resource and the second resource are available for uplink transmission, receiving the first uplink information on the third resource in the first slot.

**8.** The method according to claim 6, wherein the third resource being one of the first resource and the second resource comprises:
when a slot symbol index of the first resource comprises an index of the non-SBFD symbol in the first slot and/or the first resource is unavailable for uplink transmission, the third resource is the second resource, wherein a time-domain symbol index of the second resource does not comprise an index of the SBFD symbol in the first slot and/or the second resource is available for uplink transmission; or
when a slot symbol index of the second resource comprises an index of the SBFD symbol in the first slot and/or the second resource is unavailable for uplink transmission, the third resource is the first resource, wherein a time-domain symbol index of the first resource does not comprise an index of the non-SBFD symbol in the first slot and/or the first resource is available for uplink transmission.

**9.** The method according to claim 6 or 7, wherein the third resource being one of the first resource and the second resource comprises:
the third resource is one of the first resource and the second resource that has an earlier time-domain position; and/or
the third resource is one of the first resource and the second resource that is indicated by a network device; and/or
the third resource is one of the first resource and the second resource that is predefined in a protocol; and/or
the third resource is one of the first resource and the second resource that does not have a frequency-domain offset; and/or
the third resource is one of the first resource and the second resource that has a frequency-domain offset; and/or
the third resource is one of the first resource and the second resource that has a same slot type as a fourth resource, wherein the fourth resource is used to carry first downlink information, and the first uplink information comprises feedback information for the first downlink information.

**10.** The method according to claim 9, wherein when the third resource is one of the first resource and the second resource that is indicated by the network device, the method further comprises:
sending downlink control information DCI, wherein the DCI indicates one of the first resource and the second resource that the third resource is.

**11.** A communication apparatus, wherein the apparatus comprises a unit or a module configured to perform the method according to any one of claims 1 to 5, or the apparatus comprises a unit or a module configured to perform the method according to any one of claims 6 to 10.

**12.** A communication system, comprising a terminal device and a network device, wherein the terminal device is configured to perform the method according to any one of claims 1 to 5, and the network device is configured to perform the method according to any one of claims 6 to 10.

**13.** A computer-readable storage medium, wherein the computer-readable storage medium stores computer instructions, and when the computer instructions are run on a computer, the computer is caused to perform the method according to any one of claims 1 to 5, or the computer is caused to perform the method according to any one of claims 6 to 10.

**14.** A computer program product, wherein the computer program product comprises computer program code, and when the computer program code is run on a communication apparatus, the apparatus is caused to perform the method according to any one of claims 1 to 5, or the apparatus is caused to perform the method according to any one of claims 6 to 10.
